Europäisches Patentamt

European Patent Office

Office européen des brevets

(19)

(11)  EP 1 530 064 A1

## (12)  EUROPEAN PATENT APPLICATION

(43) Date of publication:
**11.05.2005  Bulletin 2005/19**

(51) Int Cl.⁷: **G01V 3/10**

(21) Application number: **04026146.3**

(22) Date of filing: **04.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **07.11.2003  IT  MO20030300**

(71) Applicant: **M.D. MICRO DETECTORS S.p.A.
I-41100 Modena (IT)**

(72) Inventor: **Del Monte, Mauro
41100 Modena (IT)**

(74) Representative: **Modiano, Guido, Dr.-Ing. et al
Modiano Gardi Patents,
Via Meravigli, 16
20123 Milano (IT)**

(54)  **Inductive proximity sensor, particularly for sensing presence of ferrous and non-ferrous materials.**

(57)    An inductive proximity sensor, comprising a resonant circuit (120) adapted to be affected electrically by the approach of metallic materials and comprising a control (130) for storing a value of a sampling instant when an output value of the resonant circuit (120) is measured, the sampling instant corresponding substantially to an instant in which a first amplitude of the response of the resonant circuit (120) to a pulse applied thereto, measured in the presence of a ferromagnetic material arranged at a distance from the sensor (100), is substantially equal to a second amplitude of the pulse response measured in the presence of a non-ferromagnetic material arranged at the same distance.

Fig. 1

EP 1 530 064 A1

**Description**

The present invention relates to an inductive proximity sensor, particularly for sensing presence of ferrous and non-ferrous materials.

Inductive proximity sensors are known in the field of electric detectors. They are capable of detecting the presence of ferrous or non-ferrous metallic objects by utilizing the changes induced by said objects in the variable magnetic field generated by the sensor.

The sensing element is usually constituted by a resonant circuit of the L-C type, which is composed of a capacitor and an inductor, typically connected to each other in parallel. The inductor is built so as to vary its characteristic parameters, such as inductance and loss resistance, when a metallic element is in its vicinity.

In particular, it is known that the losses of a resonant circuit can be represented in electronic terms by an imaginary loss resistance, which summarizes the effects of the various losses of the circuit, such as for example the resistance of the coil, the Foucault currents and the skin effect. In a parallel L-C circuit, the loss resistance can be represented as a resistor connected in series to the inductor.

The response of the resonant circuit to stimulation is typically an oscillation, which is then acquired and rectified and finally compared with a continuous threshold value that is set in the sensor during its manufacture.

When a metallic element is moved closer to the sensing inductor of the sensor, the amplitude and/or frequency of the oscillation of the signal measured across the resonant circuit is changed.

In the background art, a comparator circuit connected downstream of the resonant circuit reads a continuous voltage value, which indicates the change of the oscillation of the output signal of the resonant circuit; if such signal is lower than the factory-set reference value, it causes the activation of the output circuits of the sensor.

One of the greatest limitations of this type of known sensor is due to the fact that the switching distance depends on the type of material to be detected; while ferrous materials (here also referenced equally as ferromagnetic materials) are detected in an optimum manner, for non-ferrous or non-ferromagnetic materials, such as copper, the sensing characteristic can be degraded up to 25% of the activation distance of ferromagnetic materials.

This difference in sensitivity is due to the fact that ferrous and non-ferrous materials alter various electrical characteristics of the L-C resonant circuit. In fact, while the movement of ferrous materials toward the sensing coil produces predominantly an increase in the equivalent series loss resistance of the resonant circuit, with a consequent reduction in the oscillation amplitude, non-ferrous materials such as copper produce a discrete variation of the oscillation frequency, but have a limited effect on the loss resistance of the L-C circuit and therefore on the amplitude of the oscillation.

In order to achieve an increase in the sensing distances for non-ferrous materials, it is therefore necessary to sense on the resonant circuit not only the oscillation amplitude variations but also the oscillation frequency variations.

Various circuits have been proposed in order to increase sensing capabilities for non-ferrous materials. US-4,879,531 discloses a circuit in which, in addition to the L-C sensitive resonant circuit, a second L-C resonant circuit is provided, which is not affected by the material to be detected. The circuit operates with a continuous oscillation and sensing is performed according to the differences in the characteristics of the two resonant circuits.

However, providing this embodiment is rather onerous, since it requires two resonant circuits and various adjustments to be performed during manufacture. Moreover, the temperature stability and time stability of the parameters of the circuits are critical.

In a second circuit, disclosed in US-5,012,206, the operation of the oscillator is again of the continuous-wave type and factory adjustments of the resonant circuit are still necessary.

The aim of the present invention is to eliminate the drawbacks cited above, by providing a sensor and a calibration method that allow to have a same activation distance regardless of the type of metallic material.

Within this aim, an object of the invention is to allow easy adjustment and equal sensitivity of the sensor regardless of the type of metallic material to be detected.

Another object is to reduce the power absorbed by the sensor, limiting the power of the excitation signals of the resonant circuit.

Another object is to make the operation of the sensor stable over time, also optimizing its temperature stability.

A further object is to reduce cost, the size of the sensor and the number of electronic components by using digital components and a single resonant circuit to detect the presence of metallic materials.

This aim and these and other objects that will become better apparent hereinafter are achieved by an inductive proximity sensor, which comprises a resonant circuit provided with means for being affected electrically by the approach of metallic materials, characterized in that it comprises control means for storing the value of a sampling instant when an output value of the resonant circuit is measured, said sampling instant corresponding substantially to an instant in which a first amplitude of the response of the resonant circuit to a pulse applied thereto, measured in the presence of a ferromagnetic material arranged at a distance from the sensor, is substantially equal to a second amplitude of the pulse response measured in the presence of a non-ferromagnetic material arranged at the same distance.

**EP 1 530 064 A1**

The aim and objects of the present invention are also achieved by a method for detecting the proximity of a metallic material by means of a resonant circuit, said method comprising the step of measuring a response of the resonant circuit to a pulse applied thereto at a sampling instant, said sampling instant substantially corresponding to an instant in which a first amplitude of the response of the resonant circuit to a pulse applied thereto, measured in the presence of a ferromagnetic material arranged at a distance from the sensor, is substantially equal to a second amplitude of the pulse response measured in the presence of a non-ferromagnetic material arranged at the same distance.

Further characteristics and advantages of the present invention will become better apparent from the following detailed description of preferred but not exclusive embodiments of the sensor and of the method according to the invention, illustrated by way of non-limiting example in the accompanying drawings, wherein:

Figure 1 is a block diagram of the sensor according to the invention;
Figure 2 is a chart of the voltage signal applied to the resonant circuit;
Figure 3 is a chart of the response of the resonant circuit actuated with the voltage signal shown in Figure 2;
Figure 4 is a detail of the chart of the response to a pulse of the resonant circuit if the sensor detects a ferrous material;
Figure 5 is a detail of the chart of the response to a pulse of the resonant circuit if the sensor detects a non-ferrous material;
Figure 6 is a view of an exemplifying embodiment of the sensor according to the invention.

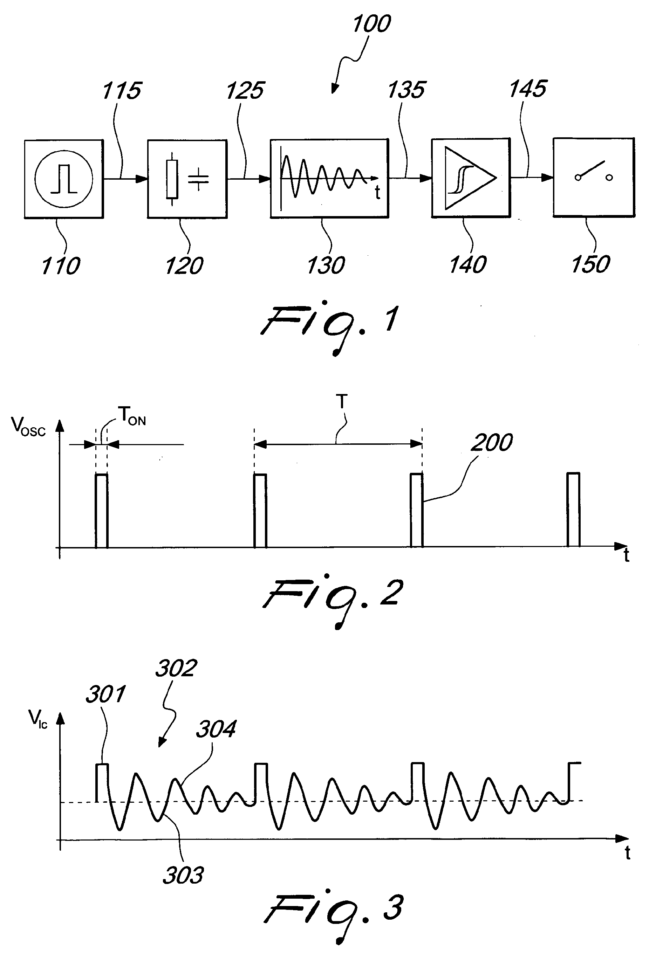

With reference to Figure 1, a sensor according to the invention is generally designated by the reference numeral 100 and comprises a pulse generator 110, which is connected to the input of a resonant circuit 120. The pulse generator, according to a preferred embodiment, comprises a quartz oscillator, by means of which it is possible to generate periodically a voltage pulse. As an alternative, the pulse generator can comprise a ceramic resonator or an appropriately stable R-C circuit.

The resonant circuit is preferably of the parallel L-C type, i.e., it comprises an inductor and a capacitor connected in parallel. In alternative embodiments, the resonant circuit can be of the series L-C type or a tuned amplifier or more generally a circuit that comprises at least one inductor and a resonance frequency.

The output of the resonant circuit is connected to control means 130, which are preferably constituted by an analog-digital device that is capable of storing information and of detecting and analyzing the signal that arrives from the resonant circuit 120. Such a device may be for example a microcontroller.

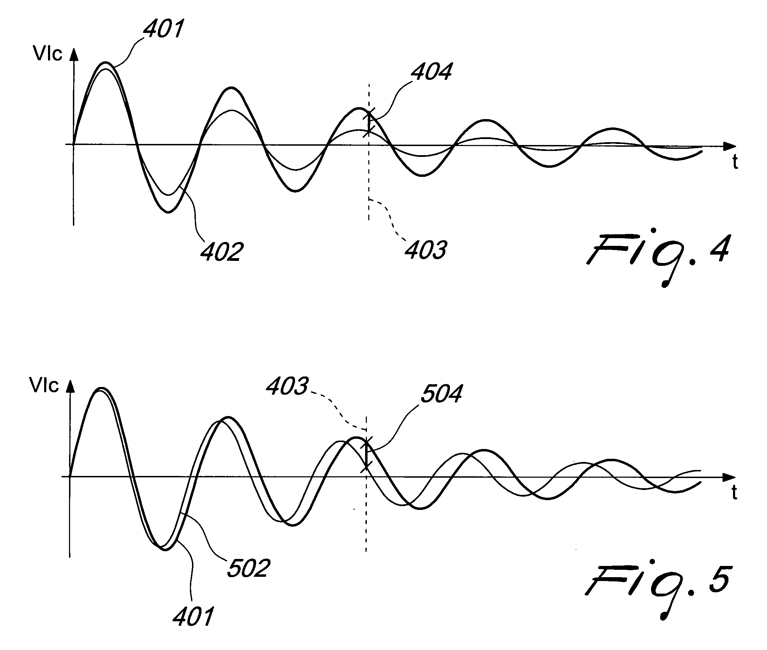

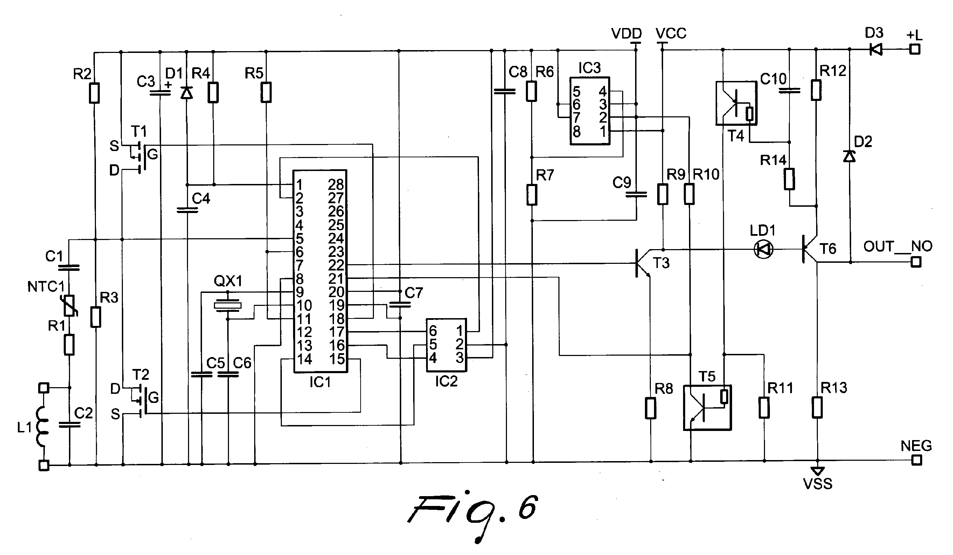

The device 130 comprises a sampler for sampling an output signal 125 of the resonant circuit at predefined times. In particular, the device 130 stores a value of a sampling instant referred to the application of a pulse to the circuit 120 on the part of the pulse generator 110. The determination of this sampling instant will be described hereinafter with reference to Figures 4 and 5.

The control means 130 comprise an output from which a signal 135, which indicates the value of the output voltage of the sampled resonant circuit 120, exits. The signal 135 constitutes the input of comparison means, which preferably comprise a hysteresis comparator 140 or a bistable component.

The comparator 140 comprises in input at least one other voltage signal that indicates a first reference value Vrif-. Advantageously, the comparator 140 comprises a second reference value Vrif+, which is greater than Vrif-, in order to have switching hysteresis.

In a preferred embodiment, the comparator 140 is comprised in the device 130 so that processing of the sampled signal occurs completely within a single component and the reference values Vrif- and Vrif+ are stored therein.

The sensor 100, finally, comprises a switched circuit 150, which is controlled by an activation signal 145 generated by the comparator 140. The switched circuit is used to control external user devices that are arranged downstream.

With reference to Figure 2, a signal (VOSC) 115 generated by the pulse generator preferably comprises a plurality of isolated voltage pulses 200, which are periodically spaced with a period T. The duration of the single pulse $T_{ON}$, as well as the repetition period T and the amplitude of the pulse, are values that are normally stored in the device 130, which also manages the timing between the signal 115 and the sampling instant of the output voltage of the resonant circuit according to known methods.

The duration of the individual pulse $T_{ON}$ is preferably far shorter than the oscillation period of the pulse response of the resonant circuit, and in particular is equal to one quarter of this period.

Figure 3 plots by way of example the response of the resonant circuit 120 to the pulses of Figure 2, which corresponds to the signal 125 that is present in output from the circuit 120.

As a consequence of the excitation of the circuit by a pulse 200, the response (Vlc) of the resonator 120 substantially consists of a first peak 301, which is followed by a substantially sinusoidal and amplitude-damped signal 302, which comprises a plurality of half-periods 303, 304, the number of which can be detected and/or calculated by the device 130.

The output signal of the resonant circuit 120 is preferably biased to an average value $V_M$ that is higher than zero in order to maintain the linearity of the operation of the components downstream of the resonant circuit, which otherwise would not be able to operate correctly with negative signal fluctuations.

A detail of the damped sinusoidal curve of Figure 3 is shown by the curve 401 of Figures 4 and 5. In particular, the curve 401 represents a portion of the response to the pulse Vlc of the resonant circuit 120 in the absence of metallic materials in the vicinity of the sensor.

Figure 4 is a plot 402 of the response of the resonant circuit to a pulse when a ferrous material is arranged at a certain distance D from the sensor. The pulse response, in this case, is still substantially sinusoidal and damped. However, while its frequency remains substantially unchanged, the amplitude of the individual oscillations is reduced.

Figure 5 instead is a plot 502 of the response of the resonant circuit to a pulse when a non-ferrous material is arranged at the same distance D from the sensor. In this case, the pulse response is still substantially sinusoidal and damped, but while the amplitude of the individual oscillations remains substantially unchanged, the frequency of the oscillations is increased with respect to the signal 401.

As anticipated, the device 130 comprises and stores a value of the sampling instant in which the output voltage of the resonant circuit is sampled. This value is represented by an instant 403 shown in Figures 4 and 5 and refers to the instant in which the last pulse sent to the resonant circuit 120 by the generator is applied. In particular, the instant 403 corresponds to an interval of Trif seconds starting from the instant when the last pulse generated by the generator 110 is applied.

The instant 403 is determined by the processor during calibration, by analyzing individually the pulse responses 402 and 502 and determining the instant when the difference 404 between the amplitude of the signal 401 and the amplitude of the signal 402 is preferably substantially equal to the difference 504 between the amplitude of the signal 401 and the amplitude of the signal 502.

This sampling instant (Trif) exists and can be calculated also by means of trigonometric calculations. For a parallel L-C circuit with an equivalent series loss resistance $R_S$, an inductance L and a capacitance C, one finds that the sampling instant complies with a relation of the following type:

$$\exp\left[-\text{Trif}\cdot\frac{\tau^{NF}-\tau^{FE}}{\tau^{NF}\cdot\tau^{FE}}\right]=\cos\left(\Delta\omega^{NF}\cdot\text{Trif}\right)+\frac{\text{sen}\left(\Delta\omega^{NF}\cdot\text{Trif}\right)}{\tan\left(\omega\cdot\text{Trif}\right)}$$

where $\Delta\omega^{NF}$ is the pulse variation induced by the non-ferrous material, $\omega$ is the oscillation pulse of the resonant circuit in the absence of metallic materials, and $\tau^{NF}$ and $\tau^{FE}$ are respectively the damping constants of the pulse response of the circuit in the presence respectively of a non-ferrous material and of a ferrous material arranged at the same distance as the first material, which are directly proportional to the current value of the inductance of the resonant circuit and inversely proportional to the value of the equivalent loss resistance.

The sampling instant is stored in the device 130. In this manner, during the normal operation of the sensor 100, the device 130 periodically measures the output of the resonant circuit at the instant when the amplitude variations of the signal measured at the instant 403 and caused by the approach of a ferrous material to the sensor are substantially equal to the amplitude variations caused by the approach of a non-ferrous material to the sensor.

Figure 6 illustrates, merely by way of non-limiting example, a preferred embodiment of the sensor according to the invention. In this case, the resonant circuit comprises a parallel L-C resonator, which is constituted by an inductor L1 and by a capacitor C2. The inductor L1 is a coil wound to a spool so as to form 60 turns of enameled wire, having a nominal diameter of 0.14 mm, Philips type B65937-A-X22 ferrite, and a Philips type B65542-B-T1 spool.

The resonator is connected to the drain terminals of two field-effect transistors T1 and T2, by means of a series constituted by a resistor R1, a thermistor with a negative coefficient NTC1, and a capacitor C1. The thermistor preferably has a thermal compensation function for variations in the operating temperature, while the transistors T1 and T2 generate the electrical pulses.

Two resistors R2 and R3 supply the medium voltage VM around which the output voltage of the resonant circuit oscillates. The common terminal of the resistors R2 and R3, the drain terminals of the transistors T1 and T2, and the branch that comprises the resonant circuit are connected to a same terminal 5 of a micro controller IC1 which is a Microchip PIC 16F873A microcontroller.

The quartz oscillator that drives IC1 and therefore the pulse generator comprises the quartz element QX1 and the capacitors C5 and C6, which are connected to the terminals of the quartz element QX1 and to the terminals 9 and 10 of the microcontroller IC 1. In the preferred embodiment, the quartz is of the type that oscillates at 20 MHz.

The diode D1, the resistor R4 and the capacitor C4 constitute a reset circuit for the microcontroller IC1.

A stabilizer IC3, the resistors R6, R7, and the capacitor C9 provide a stabilized and continuous power supply, designated by VDD, to the microcontroller IC 1 and to the driving elements of the resonant circuit. The stabilizer IC3 is preferably an LM317LM stabilizer.

The sensor further comprises capacitors C3, C7 and C8, which constitute elements for filtering the stabilized power supply, and a digital-analog converter IC2, which is connected to the microcontroller IC 1. The illustrated converter is an AD5320 and is designed to convert the binary values Vrif- and Vrif+ into analog voltage values, which are then used by the microcontroller IC1. The circuit further comprises a resistor R5 for biasing the output of the comparator.

The output block of the sensor comprises the bipolar transistors T5 and T6, the resistors R8, R9, R12, R13, and the LED diode LD1, which allow to control an external user device that is connected to the sensor.

The output block further comprises the bipolar transistors T4 and T5, the resistors R10, R11, R16 and the capacitor C10, which allow to disable the output in case of overload. The output comprises a Zener diode D2 for protection against output overvoltages.

Finally, the sensor comprises a diode D3 for protection against polarity reversals and connecting terminals, such as the +L and NEG terminals, for connection respectively to the positive power supply and to the negative power supply. The output load is preferably connected to the NEG terminal and to an output terminal of the sensor, designated by OUT_NO.

The operation of the sensor is now described with reference to the circuit of Figure 1, it being understood that the operation of the circuit shown in detail in Figure 6 is substantially similar, as can be easily understood by the person skilled in the art.

During calibration of the sensor, a first response of the resonant circuit 120 to a pulse applied thereto by the generator 110 in the presence of a ferromagnetic material arranged at a distance D from the sensor is measured.

Then a second response to the pulse of the resonant circuit 120 in the presence only of a non-ferromagnetic material arranged at the same distance D from the sensor is measured.

Finally, the device 130 stores a value of a sampling instant that corresponds substantially to the instant when a first amplitude of the first pulse response is substantially equal to a second amplitude of the second pulse response. Preferably, the first amplitude corresponds to the difference 404 between the amplitude of the signal 401 and the amplitude of the signal 402 at the instant 403, and the second amplitude corresponds to the difference 504 between the amplitude of the signal 401 and the amplitude of the signal 502 at the instant 403.

When the sensor is normally operational, the value 403 remains stored in the device 130, which draws the output voltage of the resonant circuit Trif seconds after the generation of the last pulse by the pulse generator 110.

In this manner, one has the assurance that the detection does not discriminate non-ferromagnetic materials from ferromagnetic materials and the activation distance of the sensor remains the same in both cases.

Activation of the output of the sensor is due to a comparison performed by the hysteresis comparator 140. If the value sampled by the device 130 is lower than the value Vrif-, the output of the comparator switches and the output circuit 150 is activated. Otherwise, the sampled value is ignored by the sensor.

The hysteresis comparator comprises an additional threshold value Vrif+, which is higher than Vrif-, in order to have two switching values and a range of output voltage values of the resonant circuit within which the comparator is not affected by any noise present at its input.

The device 130 preferably comprises means for detecting the number of oscillation half-periods of the output signal of the resonant circuit 120 that precede the sampling instant 403. In this manner it is possible to determine the half-wave at which sampling occurs, avoiding switching errors when a non-ferrous material approaches the sensor.

Moreover, the device 130 can be preferably programmed in order to send to the output circuit 150 the control signal generated by the comparator when the output voltage value of the resonant circuit 120 remains outside the hysteresis interval for a certain number of sampling periods.

Finally, the device 130 can be programmed to calculate the distance of the material. In this case, the sensor not only operates as an on-off sensing device, but also as a distance measurement device.

It has thus been shown that the described device and calibration method achieve the intended aim and objects.

Obviously, many modifications are evident to the person skilled in the art, who can promptly perform them without straying from the scope of the appended claims. Accordingly, the scope of the claims shall not be limited by the illustrations or by the preferred embodiments provided by the description as examples, but rather the claims shall include all the patentable novelty characteristics that reside within the present invention, including all the characteristics that would be treated as equivalent by persons skilled in the art.

The disclosures in Italian Patent Application No. MO2003A000300, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. An inductive proximity sensor, comprising a resonant circuit (120) provided with means for being affected electrically by the approach of metallic materials, **characterized in that** it comprises control means (130) for storing a value of a sampling instant when an output value of the resonant circuit (120) is measured, said sampling instant corresponding substantially to an instant in which a first amplitude of the response of the resonant circuit (120) to a pulse applied thereto, measured in the presence of a ferromagnetic material arranged at a distance from said sensor (100), is substantially equal to a second amplitude of the response to said pulse measured in the presence of a non-ferromagnetic material arranged at the same distance.

2. The proximity sensor according to claim 1, **characterized in that** said resonant circuit (120) comprises an L-C type resonator.

3. The proximity sensor according to claim 1, **characterized in that** said resonant circuit (120) is connected in input to a periodic electrical pulse generator (110).

4. The proximity sensor according to claim 3, **characterized in that** said periodic electrical pulse generator (110) comprises a device that is selected among a quartz oscillator, a ceramic resonator and an R-C circuit.

5. The proximity sensor according to claim 3 or 4, **characterized in that** the response of said resonant circuit (120) to each pulse applied by the generator (110) comprises a substantially sinusoidal damped signal (302, 402), said control means (130) comprising means for detecting the number of oscillation half-periods of said signal that precede the sampling instant

6. The proximity sensor according to claim 1, **characterized in that** it comprises comparison means (140) for comparing an output value sampled at said sampling instant with at least one threshold value, so that said control means (130) generate a signal for controlling user devices that are connected downstream of said sensor (100) when said output value exceeds said at least one threshold value.

7. The proximity sensor according to claim 6, **characterized in that** said comparison means comprise a comparator (140) with hysteresis, which comprises two threshold values, respectively an upper threshold value (Vrif+) and a lower threshold value (Vrif-).

8. The proximity sensor according to claim 6 or 7, **characterized in that** said control means (130) are adjusted so as to activate said control signal when said sampled output value remains beyond said at least one threshold value following a plurality of consecutive measurements of said output value at consecutive sampling instants.

9. The proximity sensor according to claim 5, **characterized in that** it comprises second comparison means for comparing said detected number of half-periods with a number of reference half-periods measured during storage of the sampling instant in said control means (130).

10. The proximity sensor according to any of the preceding claims, **characterized in that** said control means (130) comprise a microcontroller.

11. A method for detecting the proximity of a metallic material by means of a resonant circuit, said method comprising the step of measuring a response of said resonant circuit to a pulse applied thereto at a sampling instant, said sampling instant substantially corresponding to an instant in which a first amplitude of the response of the resonant circuit to a pulse applied thereto, measured in the presence of a ferromagnetic material arranged at a distance from said sensor, is substantially equal to a second amplitude of the response to said pulse measured in the presence of a non-ferromagnetic material arranged at the same distance.

12. The method according to claim 11, **characterized in that** it comprises the step of comparing an output value sampled at said sampling instant with at least one threshold value, so as to control user devices when said output value exceeds said at least one threshold value.

13. The method according to claim 12, **characterized in that** it comprises the step of controlling said user devices when said sampled output value remains beyond said at least one threshold value following a plurality of measurements of the output value at consecutive sampling instants.

**14.** The method according to claim 11, **characterized in that** the response of said resonant circuit to each pulse applied thereto comprises a substantially sinusoidal damped signal, the method further comprising the step of detecting the number of oscillation half-periods of said signal that precede said sampling instant.

Fig.1

Fig.2

Fig.3

Vlc

*401*

*404*

*402*

*403*

*Fig.4*

Vlc

*403*

*504*

*502*

*401*

*Fig.5*

t

t

EP 1 530 064 A1

Fig.6

**European Patent Office**

**EUROPEAN SEARCH REPORT**

Application Number

EP 04 02 6146

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 843 259 A (WEISSHAUPT ET AL) 27 June 1989 (1989-06-27) | 1-3 | G01V3/10 |
| Y | * abstract * * column 6, line 56 - column 7, line 5; figure 8 * ----- | 4 | |
| X | EP 1 278 077 A (EATON CORPORATION) 22 January 2003 (2003-01-22) | 1-3,5-10 | |
| Y | * paragraph [0010] * | 4 | |
| A | * paragraph [0017] - paragraph [0029]; figures 3-7 * ----- | 11-14 | |
| Y | US 6 191 580 B1 (GUICHARD CHRISTOPHE) 20 February 2001 (2001-02-20) * the whole document * ----- | 4 | |
| A | US 2001/032650 A1 (LEGAY THIERRY) 25 October 2001 (2001-10-25) * the whole document * ----- | 1-14 | TECHNICAL FIELDS SEARCHED (Int.Cl.7) |
| A | FR 2 796 162 A1 (SCHNEIDER ELECTRIC INDUSTRIES SA) 12 January 2001 (2001-01-12) * the whole document * ----- | 1-14 | G01V |

The present search report has been drawn up for all claims

| Place of search | Date of completion of the search | Examiner |
|---|---|---|
| Munich | 27 January 2005 | Thomas, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 6146

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2005

| Patent document cited in search report | | Publication date | Patent family member(s) | | Publication date |
|---|---|---|---|---|---|
| US 4843259 | A | 27-06-1989 | CH | 672383 A5 | 15-11-1989 |
| | | | BE | 1000173 A6 | 05-07-1988 |
| | | | DE | 3734177 A1 | 05-05-1988 |
| | | | FR | 2606163 A1 | 06-05-1988 |
| | | | GB | 2197076 A ,B | 11-05-1988 |
| | | | IT | 1222994 B | 12-09-1990 |
| | | | NL | 8702575 A | 16-05-1988 |
| EP 1278077 | A | 22-01-2003 | US | 2003016008 A1 | 23-01-2003 |
| | | | CA | 2393253 A1 | 18-01-2003 |
| | | | EP | 1278077 A2 | 22-01-2003 |
| US 6191580 | B1 | 20-02-2001 | FR | 2771822 A1 | 04-06-1999 |
| | | | DE | 69807418 D1 | 02-10-2002 |
| | | | DE | 69807418 T2 | 17-04-2003 |
| | | | EP | 0919838 A1 | 02-06-1999 |
| | | | ES | 2180129 T3 | 01-02-2003 |
| | | | JP | 11264876 A | 28-09-1999 |
| US 2001032650 | A1 | 25-10-2001 | FR | 2806808 A1 | 28-09-2001 |
| | | | EP | 1136845 A1 | 26-09-2001 |
| | | | JP | 2002000740 A | 08-01-2002 |
| FR 2796162 | A1 | 12-01-2001 | NONE | | |

EPO FORM P0459

For more details about this annex : see Official Journal of the European Patent Office, No. 12/82